# EUROPÄISCHE PATENTSCHRIFT

(11) **EP 1 931 462 B1**
(45) Veröffentlichungstag und Bekanntmachung des Hinweises auf die Patenterteilung: **26.10.2011**
(21) Anmeldenummer: 06793891.0
(22) Anmeldetag: 28.09.2006
(51) Int. Cl.: B01J 19/00, B01L 9/00

(54) **MIKROFLUIDIKSYSTEM**
MICROFLUIDIC SYSTEM
SYSTEME MICROFLUIDIQUE

(30) Priorität: 30.09.2005 DE 102005047041
(43) Veröffentlichungstag der Anmeldung: 18.06.2008
(73) Patentinhaber: SIEMENS AKTIENGESELLSCHAFT, 80333 München (DE)
(72) Erfinder: SCHNEEBERGER, Reinhold, 90556 Seukendorf (DE); LOHF, Astrid, 91056 Erlangen (DE); WENZEL, Waldemar, 90766 Fürth (DE)
(86) Internationale Anmeldenummer: PCT/EP2006/066860
(87) Internationale Veröffentlichungsnummer: WO 2007/036558

(56) Entgegenhaltungen:
- EP-A2- 1 188 476
- WO-A2-02/065221
- DE-U1- 29 703 788
- BERG VAN DEN A ET AL: "MODULAR CONCEPT FOR MINIATURE CHEMICAL SYSTEMS" DECHEMA MONOGRAPHIEN, VERLAG CHEMIE, WEINHEIM,, DE, Bd. 132, 1995, Seiten 109-123, XP000925640 ISSN: 0070-315X

## Beschreibung

Die Erfindung betrifft ein Mikrofluidiksystem, wie es gleichermaßen aus der WO 01/36085 A1, der WO 01/73823 A2 und aus der WO 02/065221 A2 bekannt ist. Die bekannten Mikrofluidiksysteme bestehen aus mehreren Modulen, die jeweils eine Mikrofluidikeinheit und eine zugehörige elektrische Steuereinheit enthalten und an ihren Rückseiten an einer Tragschiene in Reihe nebeneinander montierbar sind. Die Steuereinheiten der unterschiedlichen Module sind über einen elektrischen Leitungsbus und die Mikrofluidikeinheiten über einen Fluidbus miteinander verbunden. Wie die WO 02/065221 A2 zeigt, kann der Fluidbus dadurch gebildet werden, dass die Mikrofluidikeinheiten jeweils benachbarter Module über Verbindungskanäle enthaltende und die betreffenden Module überbrückende vereindungsteile miteinander verbunden werden.

Ein modulares Mikrofluidiksystem ist auch Gegenstand der älteren deutschen Patentanmeldung mit dem amtlichen Aktenzeichen 10 2004 022 423.4.

In den Modulen des Mikrofluidiksystems können sich im Fall von Lecks giftige oder zündfähige Gasgemische bilden, die zu einer Gefährdung des Systems und seiner Benutzer führen.

Der Erfindung liegt daher die Aufgabe zugrunde, ein Mikrofluidiksystem anzugeben, bei dem die Bildung oder Ansammlung solcher Gasgemische verhindert wird.

Gemäß der Erfindung wird die Aufgabe durch ein Mikrofluidiksystem gelöst, das aus in einer Reihe nebeneinander angeordneten Modulen besteht, die jeweils eine Mikrofluidikeinheit und eine zugehörige elektrische Steuereinheit enthalten,
- wobei die Module mit ihren Rückseiten an einer gemeinsamen senkrechten Rückwandeinheit anliegen und an dieser gehalten sind,
- wobei die Steuereinheiten über an den Rückseiten der Module und an der Rückwandeinheit angeordnete elektrische Steckverbinderteile mit einem in der Rückwandeinheit verlaufenden elektrischen Leitungsbus verbindbar sind,
- wobei die Mikrofluidikeinheiten jeweils zweier benachbarter Module über ein Verbindungskanäle enthaltendes und die betreffenden Module überbrückendes Verbindungsteil miteinander fluidisch verbunden sind,
- wobei in der Rückwandeinheit eine Fluidleitung für ein Spülfluid verläuft und von dieser Fluidleitung Abzweige zu den Modulen führen,
- wobei die Abzweige in den Modulen jeweils in einen sich vertikal über die Modulhöhe erstreckenden Verteilerraum münden, der gegenüber dem Inneren des jeweiligen Moduls durch eine mit Öffnungen versehene Verteilerplatte abgegrenzt ist, und
- wobei das Innere des jeweiligen Moduls an seiner Unter-oder Rückseite eine Austrittsöffnung für das Spülfluid enthält.

Das Innere jedes Modul wird über einen entsprechenden Abzweig von der Fluidleitung in der Rückwandeinheit mit dem Spülfluid, beispielsweise Druckluft oder Stickstoff, gespült. Um dabei eine gleichmäßige Durchströmung des Modulinneren zu erreichen und so die Bildung gefährlicher Gasgemische in Toträumen zu verhindern, wird das Spülfluid über den Verteilerraum und die Öffnungen in der Verteilerplatte gleichmäßig über die Modulhöhe verteilt in das Innere der Module geleitet. Der Verteilerraum kann beispielsweise als Spalt zwischen der Modulrückwand und der Verteilerplatte ausgebildet sein. Über das Öffnungsmuster, d. h. Anzahl, Anordnung und Größe der Öffnungen, in der Verteilerplatte kann eine modulspezifische Verteilung des Spülfluids in dem Modulinneren, beispielsweise in Abhängigkeit von den Moduleinbauten, eingestellt werden. Aus diesem Grunde sind die Verteilerplatten vorzugsweise austauschbar in den Modulen gehalten. Nach dem Durchspülen der Module wird das Gasgemisch von dem Benutzer des Mikrofluidiksystems weg nach unten oder hinten aus den Modulen ausgeleitet und dort ggf. abgesaugt.

In den Modulen kann die jeweilige Steuereinheit in einem gegenüber dem von dem Spülfluid gespülten Bereich abgekapselten Raum angeordnet sein, wobei durch die Kapselung der geforderte Zündschutz erreicht wird und die Elektronik der Steuereinheit vor, möglicherweise korrosiven, Fluidgemischen geschützt ist. Dabei ist der die Steuereinheit enthaltende Raum vorzugsweise an der Rückseite des Moduls angeordnet, wobei die Steuereinheit in thermischem Kontakt mit der Rückwandeinheit ist und über diese gekühlt, ggf. mittels eines in der Rückwandeinheit.geführten Kühlfluids, eines Lüfters oder Peltier-Elementen, zwangsgekühlt, wird.

Um einen unkontrollierten Austritt des Spülfluids aus der Rückwandeinheit zu verhindern, sind die Abzweige an denjenigen Plätzen der Rückwandeinheit, an denen keine Module gehalten sind, mittels eines Blindstopfens oder eines von dem an der Rückwand anliegenden Modul betätigbaren Ventils verschließbar. Außerdem weist die Rückwandeinheit an den Abzweigen vorzugsweise Durchfluss- und/oder Drucksensoren zur Überwachung des Spülfluiddruckes bzw. -durchflusses (Volumenstrom) auf. So kann zum einen erkannt werden, ob an einem nicht mit einem Modul besetzten Platz Spülfluid unkontrolliert austritt oder ob bei vorhandenem Modul der Spülfluiddruck bzw. -durchfluss ausreichend ist. Die Durchfluss-und/oder Drucksensoren können dazu über den Leitungsbus in der Rückwandeinheit mit einer übergeordneten Steuerung des Mikrofluidiksystems und/oder über die Steckverbinderteile mit den moduleigenen Steuereinrichtungen verbunden sein.

Die Module selbst weisen vorzugsweise im Wege des Spülfluids vor dem Verteilerraum Durchflusssensoren zur Überwachung des Spülfluiddurchflusses auf, wobei die Durchflusssensoren an den moduleigenen Steuereinrichtungen angeschlossen sind. Zur weiteren Erläuterung der Erfindung wird im Folgenden auf die Figuren der Zeichnung Bezug genommen; im Einzelnen zeigen:
- Figur 1: ein Ausführungsbeispiel des erfindungsgemäßen modularen Mikrofluidiksystems,
- Figur 2: den oberen Teil eines der Module mit einem Mikrofluidikteil und Verbindungsteilen und
- Figur 3: eines der Module und die Rückwandheinheit in Schnittdarstellung.

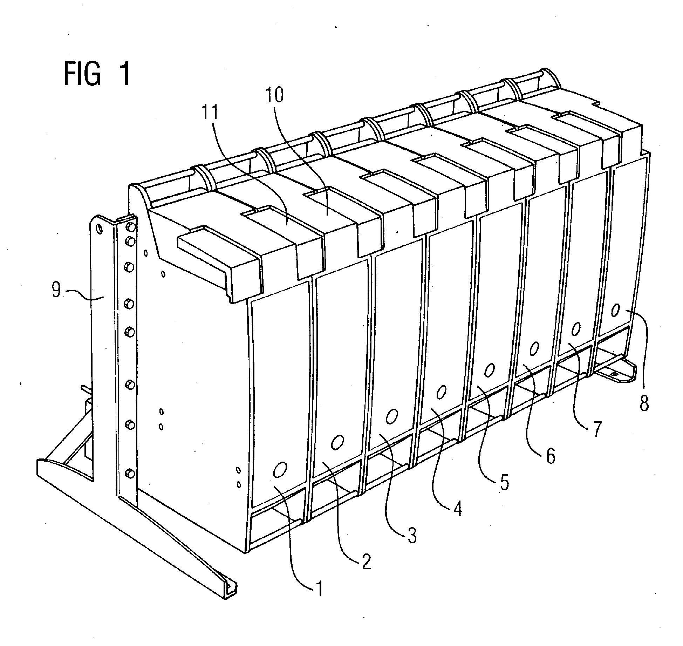

Figur 1 zeigt ein Mikrofluidiksystem mit Modulen 1 bis 8, die in einer Reihe nebeneinander angeordnet und rückseitig an einer Rückwandeinheit 9 in Form eines Trägerrahmens gehalten sind. Dabei bilden die Module 1 und 8 die Endmodule, d. h. das Anfangs- und Endmodul, des Mikrofluidiksystems. Jedes Modul 1 bis 8 enthält ein Mikrofluidikteil und eine zugehörige elektrische Steuereinheit. Die Steuereinheiten der unterschiedlichen Module sind über einen elektrischen Leitungsbus und die Mikrofluidikteile über einen Fluidbus miteinander verbunden. Der elektrische Leitungsbus verläuft in der Rückwandeinheit 9, wobei die Module 1 bis 8 über rückseitige Steckverbinder mit dem Leitungsbus lösbar verbunden sind. Der Fluidbus wird durch Verbindungskanäle enthaltende Verbindungsteile gebildet, die die Mikrofluidikteile jeweils benachbarter Module 1 bis 8 fluidisch miteinander verbinden. Die Mikrofluidikteile sind im Bereich der Moduloberseiten angeordnet und im normalen Betrieb des Mikrofluidiksystems durch lösbar an den Modulen 1 bis 8 gehaltene Abdeckhauben 10 abgedeckt. Die die Mikrofluidikteile jeweils benachbarter Module 1 bis 8 verbindenden Verbindungsteile sind durch weitere Abdeckhauben 11 abgedeckt.

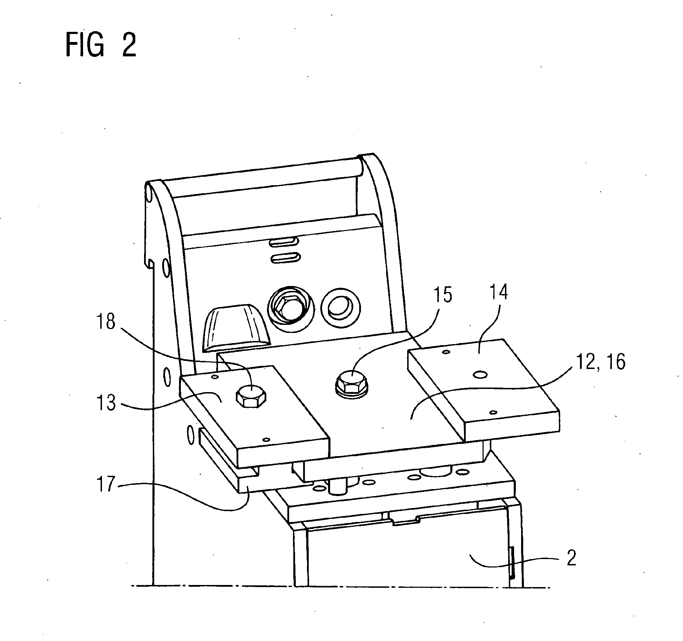

Figur 2 zeigt den oberen Teil eines der Module, z. B. 2, bei abgenommenen Abdeckhauben 10, 11, so dass das Mikrofluidikteil 12 und die Verbindungsteile 13 und 14 zu den benachbarten Modulen 1 und 3 hin sichtbar sind. Das plattenförmige Mikrofluidikteil 12 liegt mit seiner Unterseite in einem örtlich begrenzten Bereich der Plattenmitte auf einer Auflagefläche des Moduls 2 auf und wird gegen diese mittels einer Schraube 15 gepresst. Das Mikrofluidikteil 12 enthält ein Fluidkanalsystem mit Fluidanschlüssen, die auf der Oberseite 16 des Mikrofluidikteils 12 in den Randbereichen zu den Mikrofluidikteilen der benachbarten Module 1 und 3 hin angeordnet sind. Die Fluidanschlüsse jeweils zweier benachbarter Mikrofluidikteile, z. B. das Mikrofluidikteil 12 des Moduls 2 und das entsprechende Mikrofluidikteil des Moduls 1, sind durch die Verbindungskanäle in dem Verbindungsteil, z. B. 13, miteinander verbunden, welches die beiden Mikrofluidikteile überbrückt und auf deren Oberseiten in den Randbereichen aufliegt. In den gegenüberliegenden Randbereichen an den Unterseiten der beiden benachbarten Mikrofluidikteile liegt ein Klemmteil 17 an, das im Bereich zwischen beiden Mikrofluidikteilen über eine weitere Schraube 18 mit dem Verbindungsteil 13 verbunden ist und dieses gegen die Oberseiten der beiden Mikrofluidikteile presst.

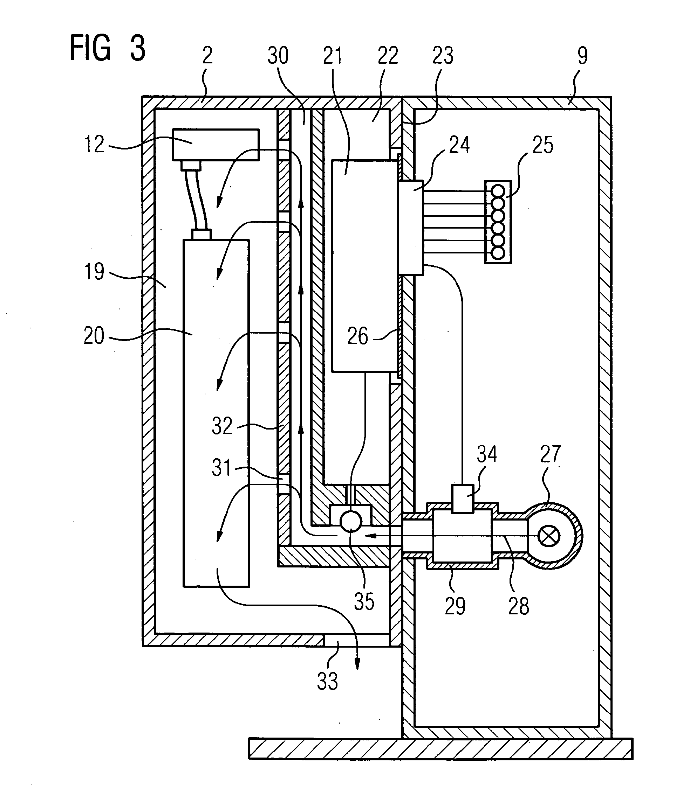

Figur 3 zeigt in schematisierter Darstellung das Modul 2 und die Rückwandeinheit 9 im Querschnitt. Das Modul 2 enthält in seinem Inneren 19 das Mikrofluidikteil 12 und eine weitere mikro- oder makrofluidische Einheit 20, beispielsweise eine Pumpe. Die Steuereinheit 21 ist in einem rückseitigen Raum 22 des Moduls 2 angeordnet und an der Rückseite 23 des Moduls 2 über einen Steckverbinder 24 mit dem elektrischen Leitungsbus 25 in der Rückwandeinheit 9 verbunden. Die Steuereinheit 21 liegt dabei über eine wärmeleitende Zwischenlage 26 an der Rückwandeinheit 9 flächig an und kann so Abwärme an die Rückwandeinheit 9 abgeben. Der Raum 22 kapselt die Steuereinheit 21 und den Steckverbinder 24 nach außen ab, wodurch der geforderte Zündschutz erreicht wird und die Elektronik der Steuereinheit 21 vor möglicherweise austretenden korrosiven Fluidgemischen geschützt wird.

In der Rückwandeinheit 9 verläuft eine Fluidleitung 27, in die von außen ein unter Druck stehendes Spülfluid 28 eingeleitet wird und von der an jedem Montageplatz für ein Modul, hier für das Modul 2, ein Abzweig 29 zu dem betreffenden Modul 2 führt. Ist der Platz nicht mit einem Modul besetzt, so wird der betreffende Abzweig mit einem Stopfen verschlossen. Der Abzweig 29 mündet in dem Modul 2 in einen sich vertikal über die Modulhöhe erstreckenden spaltförmigen Verteilerraum 30 zwischen dem abgekapselten Raum 22 für die Steuereinheit 21 und einer mit Öffnungen 31 versehenen Verteilerplatte 32, die den Verteilerraum 30 gegenüber dem Inneren 19 des Moduls 2 abgegrenzt. Das Spülfluid 28 wird über den Verteilerraum 30 und die Öffnungen 31 in der Verteilerplatte 32 gleichmäßig über die Modulhöhe in das Innere 19 des Moduls 2 verteilt, so dass im Falle von Leckagen an den Fluideinheiten 12 und 20 die Bildung oder Ansammlung gefährlicher Gasgemische in dem Modulinneren 19 verhindert wird. Über die Anzahl, Anordnung und Größe der Öffnungen 31 in der Verteilerplatte 32 kann eine modulspezifische Verteilung des Spülfluids 28 in dem Modulinneren 19 in Abhängigkeit von den Moduleinbauten 12 und 20 eingestellt werden. Nach dem Durchspülen des Modulinneren 19 wird das Spülfluid 28 und ggf. das von ihm verdünnte Gasgemisch von dem Benutzer des Mikrofluidiksystems weg durch eine Austrittsöffnung 33 aus dem Modul 2 nach unten herausgeleitet.

Die Rückwandeinheit 9 weist an den Abzweigen, hier dem Abzweig 29, der Fluidleitung 27 jeweils einen Durchfluss-und/oder Drucksensor 34 auf, der den Druck bzw. Volumenstrom des Spülfluids überwacht und dazu über den Steckverbinder 24 mit der moduleigenen Steuereinrichtung 21 verbunden ist. Das Modul 2 weist ebenfalls im Wege des Spülfluids 28 vor dem Verteilerraum 30 einen Durchflusssensor 35 auf der an der Steuereinrichtung 21 angeschlossen ist und den Durchfluss des Spülfluids 28 überwacht. Solch ein Durchflusssensor 35 besteht im einfachsten Fall aus einem Segel, dass in den Weg des Spülfluids 28 hineinragt und von der Strömung ausgelenkt wird; die Auslenkung wird dabei mittels einer Lichtschranke erfasst.

## Patentansprüche

1. Mikrofluidiksystem, bestehend aus in einer Reihe nebeneinander angeordneten Modulen (1 bis 8), die jeweils eine Mikrofluidikeinheit (12) und eine zugehörige elektrische Steuereinheit (21) enthalten,
- wobei die Module (1 bis 8) mit ihren Rückseiten (23) an einer gemeinsamen senkrechten Rückwandeinheit (9) anliegen und an dieser gehalten sind,
- wobei die Steuereinheiten (21) über an den Rückseiten (23) der Module (1 bis 8) und an der Rückwandeinheit (9) angeordnete elektrische Steckverbinderteile (24) mit einem in der Rückwandeinheit (9) verlaufenden elektrischen Leitungsbus (25) verbindbar sind,
- wobei die Mikrofluidikeinheiten (12) jeweils zweier benachbarter Module (1 bis 8) über ein Verbindungskanäle enthaltendes und die betreffenden Module (1 bis 8) überbrückendes Verbindungsteil (13, 14) miteinander fluidisch verbunden sind, **dadurch gekennzeichnet,**
- **dass** in der Rückwandeinheit (9) eine Fluidleitung (27) für ein Spülfluid (28) verläuft und von dieser Fluidleitung (27) Abzweige (29) zu den Modulen (1 bis 8) führen,
- **dass** die Abzweige (29) in den Modulen (1 bis 8) jeweils in einen sich vertikal über die Modulhöhe erstreckenden Verteilerraum (30) münden, der gegenüber dem Inneren (19) des jeweiligen Moduls (1 bis 8) durch eine mit Öffnungen (31) versehene Verteilerplatte (32) abgegrenzt ist, und
- **dass** das Innere (19) des jeweiligen Moduls (1 bis 8)an seiner Unter- oder Rückseite eine Austrittsöffnung (33) für das Spülfluid (28) enthält.

2. Mikrofluidiksystem nach Anspruch 1, **dadurch gekennzeichnet, dass** in den Modulen (1 bis 8) die jeweilige Steuereinheit (21) in einem gegenüber dem von dem Spülfluid (28) gespülten Bereich abgekapselten Raum (22) angeordnet ist.

3. Mikrofluidiksystem nach Anspruch 2, **dadurch gekennzeichnet, dass** der die Steuereinheit (21) enthaltende Raum (22) an der Rückseite (23) des Moduls (1 bis 8) angeordnet ist und dass die Steuereinheit (21) in thermischem Kontakt mit der Rückwandeinheit (9) ist.

4. Mikrofluidiksystem nach einem der vorangehenden Ansprüche, **dadurch gekennzeichnet, dass** die Abzweige (29) bei nicht vorhandenen Modulen (1 bis 8) mittels eines Blindstopfens oder Ventils verschließbar sind.

5. Mikrofluidiksystem nach einem der vorangehenden Ansprüche, **dadurch gekennzeichnet, dass** die Rückwandeinheit (9) an den Abzweigen (29) Durchfluss- und/oder Drucksensoren (34) zur Überwachung des Spülfluiddruckes bzw. -durchflusses aufweist.

6. Mikrofluidiksystem nach Anspruch 5, **dadurch gekennzeichnet, dass** die Durchfluss- und/oder Drucksensoren (34) über den Leitungsbus (25) in der Rückwandeinheit (9) mit einer übergeordneten Steuerung des Mikrofluidiksystems und/oder über die Steckverbinderteile (24) mit den moduleigenen Steuereinrichtungen (21) verbunden sind.

7. Mikrofluidiksystem nach einem der vorangehenden Ansprüche, **dadurch gekennzeichnet, dass** die Module (1 bis 8) im Wege des Spülfluids (28) vor dem Verteilerraum (30) Durchflusssensoren (35) zur Überwachung des Spülfluiddurchflusses aufweisen und dass die Durchflusssensoren (35) an den moduleigenen Steuereinrichtungen (21) angeschlossen sind.

## Claims

1. Microfluidic system, consisting of modules (1 to 8) arranged in series next to each other, which each contain a microfluidic unit (12) and an associated electric control unit (21),
- whereby the rear faces (23) of the modules (1 to 8) lie against a common vertical rear wall unit (9) and being held against said unit,
- whereby the control units (21) are able to be connected to an electric line bus (25) extending through the rear wall unit (9) via electric connectors (24) arranged on the rear faces (23) of the module (1 to 8) and on the rear wall unit (9),
- whereby the microfluidic units (12) of two adjacent modules (1 to 8) in each instance are interconnected to allow the passage of fluid via a connecting part (13, 14) that contains connection channels and spans the relevant modules (1 to 8),
- whereby a fluid conduit (27) for a rinsing fluid (28) extends through the rear wall unit (9) and branches (29) lead from this fluid conduit (27) to the modules (1 to 8),
- whereby the branches (29) each flow into a distributor compartment (30) which extends vertically across the module height in the modules (1 to 8), said distributor compartment (30) being delimited in relation to the interior (19) of the respective module (1 to 8) by a distributor panel (32) that is provided with openings (31) and
- whereby the interior (19) of the respective module (1 to 8) contains an exit opening (33) for the rinsing fluid (28) on its lower or rear surface.

2. Microfluidic system according to claim 1, **characterised in that** the respective control unit (21) is arranged in the modules (1 to 8) in a compartment (22) which is shut off in relation to the area rinsed by the rinsing fluid (28).

3. Microfluidic system according to claim 2, **characterised in that** the compartment (22) containing the control unit (21) is arranged on the rear face (23) of the module (1 to 8) and that the control unit (21) is thermally connected to the rear wall unit (9).

4. Microfluidic system according to one of the preceding claims, **characterised in that** the branches (29) can be closed by means of a blank plug or valve when modules (1 to 8) are not present.

5. Microfluidic system according to one of the preceding claims, **characterized in that** the rear wall unit (9) has flow rate and/or pressure sensors (34) on the branches (29) for monitoring the rinsing fluid pressure and/or flow rate.

6. Microfluidic system according to claim 5, **characterized in that** the flow rate and/or pressure sensors (34) are connected to a superior controller of the microfluidic system via the line bus (25) in the rear wall unit (9) and/or to the control facility belonging to the module (21) by way of the connector parts (24).

7. Microfluidic system according to one of the preceding claims, **characterized in that** the modules (1 to 8) comprise flow rate sensors (35) for monitoring the rinsing fluid flow rate in the path of the rinsing fluid (28) upstream of the distributor compartment (30) and that the flow rate sensors (35) are connected to the control facilities (21) belonging to the module.

## Revendications

1. Système microfluidique constitué de modules ( 1 à 8 ), qui sont disposés les uns à côté des autres en une rangée et qui ont respectivement une unité ( 12 ) microfluidique et une unité ( 21 ) de commande électrique associées,
- dans lequel les modules ( 1 à 8 ) s'appliquent par leur face ( 23 ) arrière à une unité ( 9 ) de paroi arrière verticale commune et y sont maintenus,
- dans lequel les unités ( 21 ) de commande peuvent, par des parties ( 24 ) formant connecteur électrique montées sur les faces ( 23 ) arrières des modules ( 1 à 8 ) et sur l'unité ( 9 ) de paroi arrière, être reliées à un bus ( 25 ) de conduction électrique s'étendant dans l'unité ( 9 ) de paroi arrière,
- dans lequel les unités ( 12 ) microfluidiques de respectivement deux modules ( 1 à 8 ) voisins communiquent fluidiquement entre elles par une partie ( 13, 14 ) de liaison contenant des canaux de liaison et court-circuitant les modules ( 1 à 8 ) concernés, **caractérisé**
- **en ce que**, dans l'unité ( 9 ) de paroi arrière, s'étend un conduit ( 27 ) pour un fluide ( 28 ) de lavage et des dérivations partent de ce conduit ( 27 ) pour du fluide ( 29 ) vers les modules ( 1 à 8 ),
- **en ce que** les dérivations ( 29 ) débouchent dans les modules ( 1 à 8 ) respectivement dans une chambre ( 30 ) formant répartiteur, s'étendant verticalement sur la hauteur du module et délimitée par rapport à l'intérieur ( 19 ) de chaque module ( 1 à 8 ) par une plaque ( 32 ) formant répartiteur et munie d'ouvertures ( 31 ), et
- **en ce que** l'intérieur ( 19 ) de chaque module ( 1 à 8 ) comporte, sur sa face inférieure ou arrière, une ouverture ( 33 ) de sortie du fluide ( 28 ) de lavage.

2. Système microfluidique suivant la revendication 1, **caractérisé en ce que**, dans les modules ( 1 à 8 ), le dispositif ( 22 ) de commande respectif est disposé dans une chambre ( 22 ) encapsulée par rapport à la partie lavée par le fluide ( 28 ) de lavage.

3. Système microfluidique suivant la revendication 2, **caractérisé en ce que** la chambre ( 22 ) comprenant l'unité ( 21 ) de commande est disposée sur la face ( 23 ) arrière du module ( 1 à 8 ) et **en ce que** l'unité ( 21 ) de commande est en contact thermique avec l'unité ( 9 ) de paroi arrière.

4. Système microfluidique suivant l'une des revendications précédentes, **caractérisé en ce que** les dérivations ( 29 ) peuvent, pour des modules ( 1 à 8 ) qui ne sont pas présents, être fermées au moyen d'un tampon ou d'un robinet.

5. Système microfluidique suivant l'une des revendications précédentes, **caractérisé en ce que** l'unité ( 9 ) de paroi arrière a, sur les dérivations ( 29 ), des capteurs ( 34 ) de débit et/ou de pression pour le contrôle de la pression ou du débit du fluide de lavage.

6. Système microfluidique suivant la revendication 5, **caractérisé en ce que** les capteurs ( 34 ) de débit et/ou de pression sont reliés à une commande supérieure hiérarchiquement du système microfluidique par le bus ( 25 ) de conduction dans l'unité ( 9 ) de paroi arrière et/ou aux dispositifs ( 21 ) de commande propres au module par les pièces ( 24 ) formant connecteur.

7. Système microfluidique suivant l'une des revendications précédentes, **caractérisé en ce que** les modules ( 1 à 8 ) ont, dans le trajet du fluide ( 28 ) de lavage avant la chambre ( 30 ) formant répartiteur, des capteurs ( 35 ) de débit pour contrôler le débit du fluide de lavage et **en ce que** les capteurs ( 35 ) de débit sont raccordés aux dispositifs ( 21 ) de commande propres au module.
